# EUROPEAN PATENT APPLICATION

(11) **EP 3 503 522 A1**
(43) Date of publication of application: **26.06.2019**
(21) Application number: 18211573.3
(22) Date of filing: 11.12.2018
(51) Int. Cl.: H04N 5/225, H04N 5/232, H04N 13/254

(54) **DUAL CAMERA SYSTEM OF AUTOMATIC IMAGE RECOGNITION WITH A USB INTERFACE**

(30) Priority: 20.12.2017 ES 201731440
(71) Applicant: Federal Signal Vama, S.A.U., 08339 Vilassar de Dalt (Barcelona) (ES)
(72) Inventor: MUÑOZ GARCIA, Juan Jose, 08339 VILASSAR DE DALT (Barcelona) (ES)
(74) Representative: Ungria López, Javier

(57) **Abstract**

The present invention refers to a dual camera system (1) of automatic image recognition with a USB interface. The system comprises a dual camera (2) and a processor (5). The dual camera comprises: a first camera (2a) with a USB interface (3) for capturing colour images of the surroundings; a second camera (2b) with a USB interface for capturing images selected between colour and monochrome images for processing images; a microcontroller (15) for controlling and synchronising the lighting; a hub (4) with a USB interface connected to the first and the second cameras. The processor with a USB connection, which is connected to the dual camera, is configured to analyse the images captured by the first and second cameras, as well as to manage the power of the first and second cameras.

## Description

### FIELD OF THE INVENTION

The present invention refers to a dual camera system (1) of automatic image recognition with a USB interface ("Universal Serial BUS").

The technical field of the invention is within the systems of image recognition, especially the ALPR ("Automatic License Plate Recognition") systems for reading and identifying license plates, face recognition, optical character recognition "OCR", and the detection of patterns of shapes and colours by means of cameras placed on vehicles, emergency lights on vehicles, fixed posts, urban fixtures, etc.

### BACKGROUND OF THE INVENTION

Some of the current ALPR systems use SLVDS (Serial Low-Voltage Differential Signalling) type communications between the cameras for capturing images and the processor in charge of processing the images. SLVDS communication is a system that transmits a lot of information via two cables at very low voltages. This technology is obsolete and the problem thereof is that it is only used for transmitting video, and a decoder is needed in order to translate this form of communication into another form of communication in order to be interpreted by the processor so it can handle the information.

In addition, in order to be able to communicate with other elements such as microcontrollers or other elements that require communications and that form part of the camera, this SLVDS communications system is not valid, so another communications channel needs to be added, for example RS-232, so an RS-232 connection needs to be added between the cameras for capturing images and the processor. The RS-232 connection is a type of serial communication that requires two cables.

Therefore, the systems of the state of the art use at least eight cables on each camera for capturing images, which are: four cables for the two SLVDS communications channels, two cables for the RS-232 type communication, and two other cables for powering the camera for capturing images. In addition, the systems of the state of the art require a special decoder for converting the signal received from the cameras into an adequate signal readable by the processor in charge of processing the images captured by the cameras.

Therefore, it would be beneficial to find a way of connecting the cameras for capturing images and the processor that minimises the number of cables between them, and that provides better compatibility between the interfaces already present in the majority of the processors available in the market.

### DESCRIPTION OF THE INVENTION

One of the aspects of the invention proposes a dual camera system of automatic image recognition with a USB interface. The USB connection is a communications standard that any computer system can understand, making it unnecessary to include any special decoders for connecting the cameras with the processors in charge of processing the images captured by the cameras. The dual camera system of automatic image recognition with a USB interface of the present invention comprises a dual camera and a processor. The dual camera in turn comprises: a first camera with a USB interface for capturing colour images of the surroundings; a second camera with a USB interface for capturing images selected between colour and monochrome images for processing images; a microcontroller for controlling and triggering LED lights (light emitting diodes) for lighting; a hub with a USB interface connected to the first and the second cameras and to the microcontroller. The processor with a USB connection is connected to the hub and it is configured to analyse the images captured by the first and second cameras, to control the LED lights, as well as to manage the power of the first and second cameras. In addition, placing a USB hub inside the dual camera of the present invention has the advantage that a single communications channel can exit the dual camera, which uses only two cables in the case of featuring a USB 2.0 connection or four cables in the case of featuring a USB 3.0 connection or better, plus the two cables for powering the camera.

In an embodiment of the invention, the processor also comprises a connection selected between an Ethernet, Wi-Fi and a mobile data connection.

In an embodiment of the invention, the dual camera comprises an enclosed housing and a enclosed connector, which is connected to the hub. The enclosed housing comprises a translucent part that allows the first and second cameras to capture images.

In an embodiment of the invention, the processor may be located inside the enclosed housing or placed as an individual unit separated from the dual camera to which it is connected via USB communications protocol.

In an embodiment of the invention, the dual camera also comprises "LED" lights (light emitting diodes) selected between infrared and visible light LEDs, which are connected to the microcontroller.

In an embodiment of the invention, at least the first and second cameras comprise a triggering channel connected to the microcontroller, which in turn controls the trigger of the LEDs, in order to synchronise the triggering of the LEDs and the aperture of the shutter of the cameras.

In an embodiment of the invention, the first and second cameras are powered by the USB connection.

In another embodiment of the invention, the system also comprises a main unit for processing information, which in turn comprises at least one image recognition processor configured to do the following: "ALPR" automatic license plate recognition; face recognition; optical character recognition "OCR"; video streaming transmission; and, detection of patterns of shapes and colours. The main unit for processing information also comprises a connection selected between an Ethernet, Wi-Fi and a mobile data (3G, 4G, 5G, etc.) connection in order to connect it to the processor.

### BRIEF DESCRIPTION OF THE FIGURES

Figure 1.- Dual camera system of automatic image recognition with a USB interface, with a microprocessor separated from the dual camera.
Figure 2.- Dual camera without incorporated microprocessor.
Figure 3.- Dual camera system of automatic image recognition with a USB interface, with a microprocessor incorporated in the dual camera.
Figure 4.- Dual camera with incorporated microprocessor, and cable and/or wireless communications.

### PREFERRED EMBODIMENT OF THE INVENTION.

An example of an embodiment of the invention is described below, for illustration purposes and without limitation.

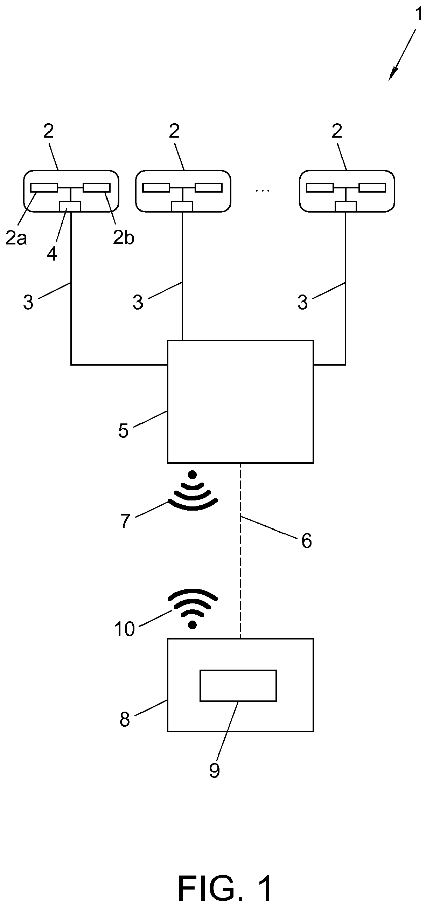

Figure 1 shows an embodiment of the dual camera system of automatic image recognition with a USB interface of the present invention. The dual camera system of automatic image recognition with a USB interface (1) comprises "n" dual cameras (2), a processor (5) and a main unit for processing information (8). In the embodiment shown in figure 1, the "n" dual cameras (2), the processor (5) and the main unit for processing information (8) are independent elements, where the "n" dual cameras (2) are connected to the processor via USB communications protocol.

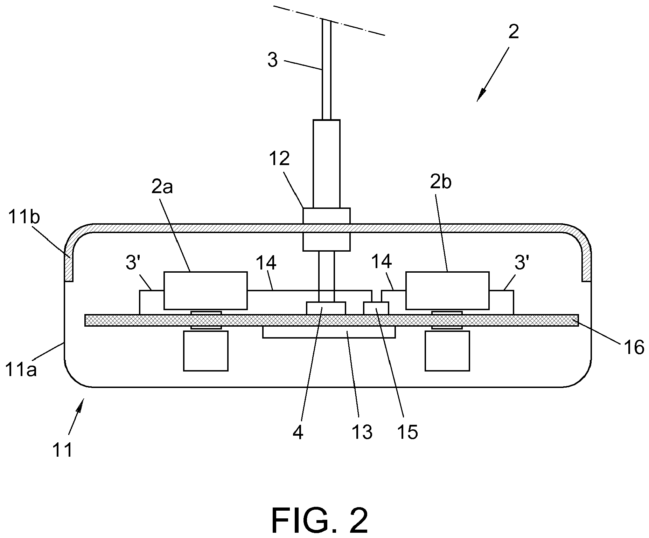

In addition, each of the dual cameras (2) (see Figure 2) comprises: a first camera (2a) with a USB interface (3') for capturing colour images of the surroundings; a second camera (2b) with a USB interface (3') for capturing images that can either be colour or monochrome for processing images; a hub (4) with a USB interface (3') connected to the first camera (2a) and the second camera (2b), and that it is also connected to the processor (5) by means of the enclosed connector (12). The hub (4) acts as a local hub ("HUB") of the first (2a) and second cameras (2b) so that the connection (3) with the processor (5) can be carried out with a single connection via USB communications protocol. The dual camera (2) comprises an enclosed housing (11) and the enclosed connector (12), which is connected to the hub (4). The enclosed housing (11) comprises an opaque part (11b) and a translucent part (11a), which allows the first (2a) and second camera (2b) to capture images while the housing protects the cameras from external agents such as blows by objects, air, sunlight, etc. The dual camera (2) has LED diodes (13) that can be infrared and/or visible light LEDs, which are connected to the microcontroller (15), while the latter is in turn connected to the processor (5) through the hub (4) by means of the connection via USB communications protocol (3). Similarly, the first (2a) and second cameras (2b) comprise a triggering channel (14) connected to the microprocessor (15), and these cameras are in turn connected to the processor (5) through the hub (4) via USB communication protocol (3). Finally, the first (2a) and second cameras (2b) are powered by the USB connection (3). In the embodiment shown in figure 2, the LEDs (13), the hub (4) and the microcontroller (15) are located on a PCB (16) that connects them together physically (both electricity and data reception/transmission).

Going back to figure 1, the processor (5) is connected to the dual camera (2) via USB communication protocol in order to analyse the images captured by the first (2a) and second cameras (2b). In addition, the processor (5) is in charge of managing the power of the first (2a) and second cameras (2b). The system (1) also comprises a main unit for processing information (8). The system (1) can be implemented with the unit (8) placed locally, so that it is connected with the processor (5) by means of an Ethernet (6) connection in the preferred embodiment. Alternatively, if the system (1) is implemented separately, the main unit for processing information (8) can be connected with the processor (5) by means of a wireless connection (Wi-Fi, 3G mobile network, 4G, etc.) (10), with the processor (5) also comprising a wireless connection (Wi-Fi, 3G mobile network, 4G, etc.) (7), or by means of an Ethernet connection (6).

The main unit for processing information (8) comprises at least one image recognition processor (9) configured to carry out tasks such as: "ALPR" automatic license plate recognition; face recognition; optical character recognition "OCR"; video streaming transmission; and, detection of patterns of shapes and colours.

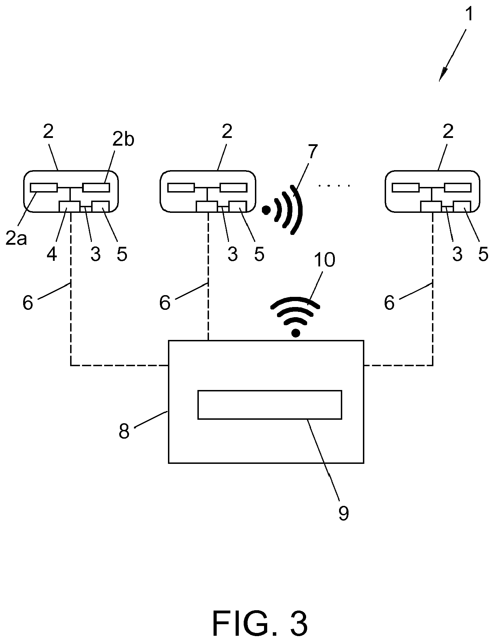

Figure 3 shows an embodiment of the dual camera system of automatic image recognition with a USB interface of the present invention, similar to the one in figure 1. The dual camera system of automatic image recognition with a USB interface (1) comprises "n" dual cameras (2), a processor (5) for each dual camera and a main unit for processing information (8). Unlike the embodiment shown in figure 1, each of the "n" dual cameras (2) comprises a processor (5) inside the housing (11). In this way, each of the processors (5) can be connected to the main unit for processing information (8) by means of a wireless connection (Wi-Fi, 3G mobile network, 4G, etc.) (10) or by means of a cable (6 - Ethernet).

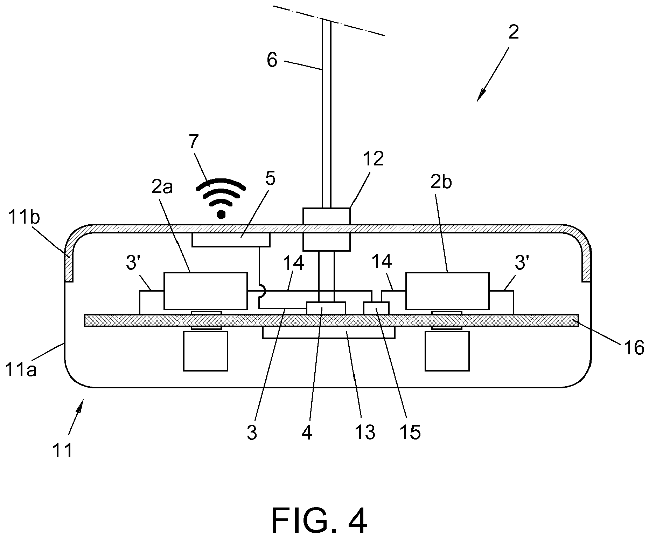

At the same time, each of the dual cameras (2) (see Figure 4), according to the embodiment shown in figure 3, comprises: a first camera (2a) with a USB interface (3') for capturing colour images of the surroundings; a second camera (2b) with a USB interface (3') for capturing images that can either be colour or monochrome for processing images; a hub (4) connected to the first camera (2a) and the second camera (2b), and that is also connected to the processor (5), which are connected together via USB communication protocol. The hub (4) acts as a local hub ("HUB") of the first (2a) and second cameras (2b) so that the connection (3) with the processor (5) can be carried out using a single connection via USB communication protocol. The dual camera (2) comprises an enclosed housing (11) and the enclosed connector (12), which is connected to the hub (4). The enclosed housing (11) comprises an opaque part (11b) and a translucent part (11a), which allows the first (2a) and second camera (2b) to capture images while the housing protects the cameras from external agents such as blows by objects, air, sunlight, etc. The dual camera (2) has LED diodes (13) that can be infrared and/or visible light LEDs, which are connected to the microcontroller (15), while the latter is in turn connected to the processor (5) through the hub (4) by means of the connection via USB communication protocol (3). Similarly, the first (2a) and second cameras (2b) comprise a triggering channel (14) connected to the microprocessor (15), and these cameras are in turn connected to the processor (5) through the hub (4) via USB communication protocol (3). Finally, the first (2a) and second cameras (2b) are powered by the USB connection (3). In the embodiment shown in figure 4, the LEDs (13), the hub (4) and the microcontroller (15) are located on a PCB (16) for the data and electricity interconnection of them.

## Claims

1. Dual camera system of automatic image recognition with a USB interface (1), **characterised in that** it comprises:
a dual camera (2) which in turn comprises:
* a first camera (2a) with a USB interface (3) for capturing colour images of the surroundings;
* a second camera (2b) with a USB interface (3) for capturing images selected between colour and monochrome images for processing images;
* a microcontroller (15) for controlling the triggering of LED lights (13);
* a hub (4) with a USB interface (3) connected to the first (2a) and the second (2b) cameras, and to the microcontroller (15);
a processor (5) with a USB communication interface that is connected to the hub (4) in order to analyse the images captured by the first (2a) and second cameras (2b), to control the LED lights, and to manage the power of the first (2a) and second cameras (2b).

2. Dual camera system of automatic image recognition with a USB interface according to claim 1, **characterised in that** the processor (5) also comprises a connection selected between an Ethernet (6), Wi-Fi and a mobile data (7) connection.

3. Dual camera system of automatic image recognition with a USB interface according to claim 1, **characterised in that** it also comprises a main unit for processing information (8) that in turn comprises at least one image recognition processor (9) configured to perform:
* an automatic license plate recognition "ALPR";
* a face recognition;
* an optical character recognition "OCR";
* a video streaming transmission;
* a detection of patterns of shapes and colours.

4. Dual camera system of automatic image recognition with a USB interface according to claim 3, **characterised in that** the main unit for processing information (8) also comprises a connection selected between an Ethernet (6), Wi-Fi and a mobile data (10) connection in order to connect the main unit to the processor (5).

5. Dual camera system of automatic image recognition with a USB interface as claimed in claims 1 or 2, **characterised in that** the dual camera (2) comprises an enclosed housing (11) and an enclosed connector (12), which is connected to the hub (4).

6. Dual camera system of automatic image recognition with a USB interface according to claim 5, **characterised in that** the enclosed housing (11) comprises a translucent part (11a) that allows the first (2a) and second cameras (2b) to capture images.

7. Dual camera system of automatic image recognition with a USB interface as claimed in claims 5 or 6, **characterised in that** the processor (5) is comprised in the housing (11).

8. Dual camera system of automatic image recognition with a USB interface as claimed in any one of the previous claims, **characterised in that** the LED lights (13) are selected between infrared and visible lights.

9. Dual camera system of automatic image recognition with a USB interface as claimed in any one of the previous claims, **characterised in that** at least the first (2a) and the second camera (2b) comprise a triggering channel (14) connected to the microprocessor (15), which is in turn connected to the processor (5) through the hub (4) via USB communications interface.

10. Dual camera system of automatic image recognition with a USB interface as claimed in any one of the previous claims, **characterised in that** at least the first (2a) and second cameras (2b) are powered by the USB connection (3).
